# EUROPEAN PATENT APPLICATION

(11) **EP 2 993 343 A1**
(43) Date of publication of application: **09.03.2016**
(21) Application number: 15183217.7
(22) Date of filing: 31.08.2015
(51) Int. Cl.: F03D 3/06, F03D 3/00

(54) **WIND TURBINE SYSTEM**

(30) Priority: 02.09.2014 US 201414474318
(71) Applicant: Ramanathan, Subramanian, 600 130 Chennai (IN); Prathish, Nelson, 607807 Tamil Nadu (IN)
(72) Inventor: Ramanathan, Subramanian, 600 130 Chennai (IN); Prathish, Nelson, 607807 Tamil Nadu (IN)
(74) Representative: Cabinet Chaillot

(57) **Abstract**

A wind turbine system **(100)** is provided. The system **(100)** may include a plurality of blades **(102).** Each of the blades **(102)** may include a first pole **(104),** a second pole **(106),** a third pole **(108)** and at least one flexible member **(112).** The first pole **(104),** the second pole **(106)** and the third pole **(108)** may be positioned upright. A first end **(110)** of each of first pole **(104),** the second pole **(106)** and the third pole **(108)** may be disposed at corners of a triangle **(134).** The flexible member **(112)** may be connected to at least the first pole **(104)** and the third pole **(108)** such that the second pole **(106)** is disposed between the first pole **(104),** the flexible member **(112)** and the third pole **(108).**

## Description

The following specification particularly describes the invention and the manner in which it is to be performed.

### BACKGROUND

### Field

The subject matter in general relates to wind turbines.

### Discussion of related art

Wind turbines harness wind's kinetic energy and convert it into electrical energy. Two of the main types of conventional wind turbines are Vertical Axis Wind Turbines (VAWT) and Horizontal Axis Wind Turbines (HAWT).

Conventionally, in VAWT, the rotor blades are positioned such that the axis of rotation of the blades is perpendicular to the direction of wind and parallel/perpendicular to ground.

Conventionally, in HAWT, the rotor blades are positioned such that the axis of rotation is parallel to the direction of wind and also parallel to ground.

Wind turbine which may be different from conventional wind turbines may be desired.

### SUMMARY

In an embodiment a wind turbine system may be provided. The system may include a plurality of blades. Each of the blades may include a first pole, a second pole and a third pole. Each of the first pole, the second pole and the third pole may be positioned upright and a first end of each of the first pole, the second pole and the third pole may be disposed at corners of a triangle. The system may further include at least one flexible member. The flexible member may be connected to at least the first pole and the third pole such that the second pole is disposed between the first pole, the flexible member and the third pole.

### BRIEF DESCRIPTION OF DRAWINGS

Embodiments are illustrated by way of example and not limitation in the Figures of the accompanying drawings, in which like references indicate similar elements and in which:
**FIG. 1A** is a perspective view of an exemplary wind turbine system **100;**
**FIG. 1B** is a perspective view of a flexible member **112** provided in blades **102** of the system **100** of **FIG. 1A****,** wherein the flexible member **112** is in an open configuration **120;**
**FIG. 1C** is a perspective view of the flexible member **112** provided in the blades **102** of the system **100** of **FIG. 1A****,** wherein the flexible member **112** is in a closed configuration **118;**
**FIG. 1D** is a side view of a pole **104, 106** or **108** which is provided in the blades **102** of the system **100;**
**FIG. 1E** is a sectional view, about an axis A-A, of the pole **104, 106** or **108** of **FIG. 1D****;**
**FIG. 2** is a perspective view of another exemplary wind turbine system 100 in which multiple flexible members **112** are provided in each of the blades **102;**
**FIG. 3** is a perspective view of an exemplary alternate configuration of a blade **102** in which poles **104, 106, 108** of the blade **102** converge;
**FIG. 4** is a perspective view of another exemplary alternate configuration of a blade **102** in which poles **104, 106, 108** of the blade **102** diverge.
**FIG. 5A** is a perspective view of another exemplary wind turbine system **500; and**
**FIG. 5B** is another perspective view of the wind turbine system **500** of **FIG. 5A****.**

### DETAILED DESCRIPTION

I. OVERVIEW
II. FIRST EXEMPLARY SYSTEM
III. EXEMPLARY WORKING OF FIRST EXEMPLARY SYSTEM
IV. SECOND EXEMPLARY SYSTEM
V. CONCLUSION

### I. OVERVIEW

A wind turbine system may be provided to convert the kinetic energy of wind into electrical energy. The system may include a plurality of blades, wherein each of the blades may include a first pole, a second pole, a third pole and at least one flexible member. The first pole, the second pole and the third pole may be positioned upright. A first end of each of the first pole, the second pole and the third pole may be disposed at corners of a triangle. The flexible member may be connected to at least the first pole and the third pole such that the second pole may be disposed between the first pole, the flexible member and the third pole.

The flexible member included in the blade may be configured to transform from a closed configuration to an open configuration and vice versa. The blade may offer maximum resistance to wind when the flexible member is in the open configuration. The blade may offer minimum resistance to wind when the flexible member is in the closed configuration. The resistance offered to wind may result in rotation of the blade. The blades may rotate about an axis of rotation. The axis of rotation of the blades may be both parallel and perpendicular to ground. Further, the blades may be oriented such that the axis of rotation is perpendicular to the direction of the wind.

The following detailed description includes references to the accompanying drawings, which form part of the detailed description. The drawings show illustrations in accordance with example embodiments. These example embodiments are described in enough detail to enable those skilled in the art to practice the present subject matter. However, it will be apparent to one of ordinary skill in the art that the present invention may be practiced without these specific details. In other instances, well-known methods, procedures and components have not been described in detail so as not to unnecessarily obscure aspects of the embodiments. The embodiments can be combined, other embodiments can be utilized or structural and logical changes can be made without departing from the scope of the invention. The following detailed description may, therefore, not to be taken as a limiting sense.

In this document, the terms "a" or "an" are used, as is common in patent documents, to include one or more than one. In this document, the term "or" is used to refer to a nonexclusive "or," such that "A or B" includes "A but not B," "B but not A," and "A and B," unless otherwise indicated.

### II. FIRST EXEMPLARY SYSTEM

In an embodiment, the wind turbine system **100** may be provided to convert kinetic energy from wind into electrical energy.

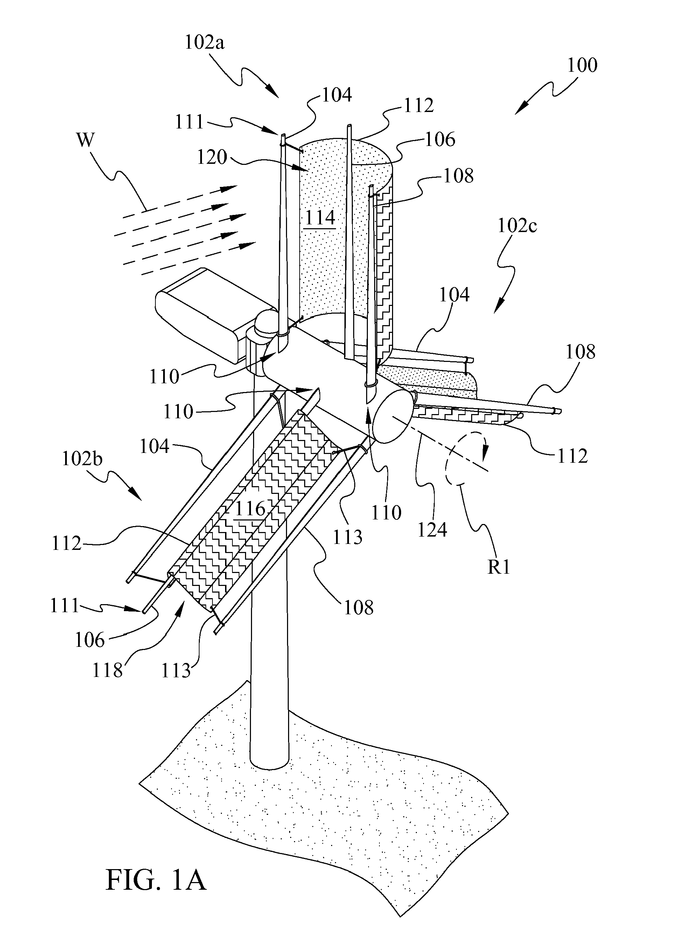

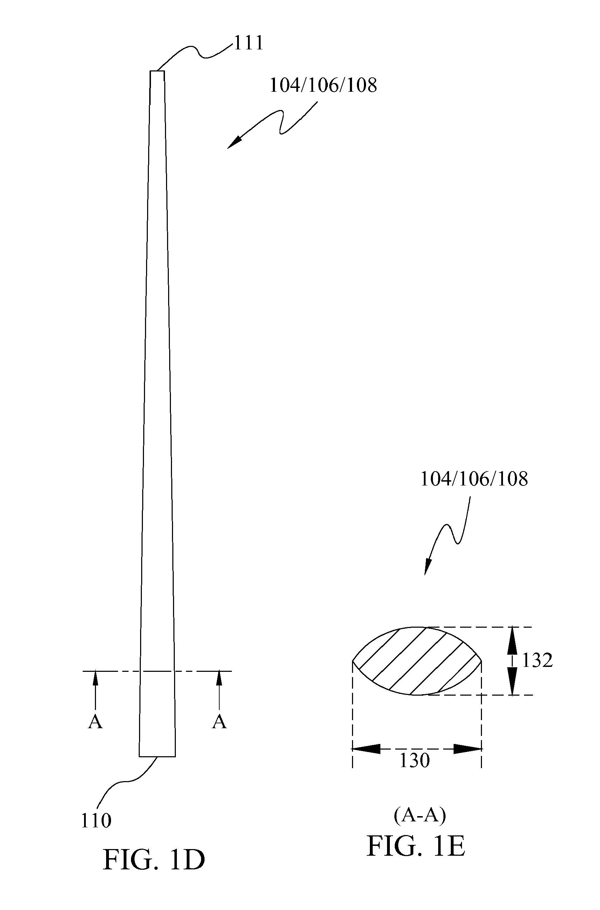

Referring to figures, and more specifically to **FIG. 1A-1E****,** a wind turbine system **100** may include a plurality of blades **102a, 102b, 102c** (the blades **102a, 102b, 102c** may be collectively referred to as blades **102,** or may be individually referred to as blade **102**). Each of the blades **102** may include a first pole **104,** a second pole **106,** a third pole **108** and at least one flexible member **112.**

In an embodiment, the first pole **104,** the second pole **106** and the third pole **108** are positioned upright. Further, a first end **110** of each of the first pole **104,** the second pole **106** and the third pole **108** are disposed at corners of a triangle **134.** The flexible member **112** may be connected to at least the first pole **104** and the third pole **108.** The flexible member **112** may be connected such that the second pole **106** is disposed between the first pole **104,** the flexible member **112** and the third pole **108.**

Referring to **FIG. 1D-1E****,** each of the first pole **104,** the second pole **106** and the third pole **108** may define an oblong cross-section having a major axis **130** and a minor axis **132.** Each of the poles **104, 106** and **108** may define a cross sectional area, wherein the cross sectional area may be larger at the first end **110** compared to the cross sectional area at the end **111** opposite to the first end **110.**

In an embodiment, the cross sectional area of one or more poles **104, 106** and **108** may be uniform along its length.

In embodiment, the cross sectional area of one or more poles **104, 106** and **108** may be decrease along one or major axis **130** and minor axis **132,** as the poles **104, 106** and **108** extend from the first end **110** to the other end **111.**

The blade **102** may be configured such that the distance **"D1"** between the first end **110** of the first pole **104** and the second pole **106** may be equal to the distance **"D2"** between the first end **110** of the third pole **108** and the second pole **106.**

The flexible member **112** may be connected to the first pole **104** and the third pole **108** using a plurality of flexible connecting members **113.** The flexible member **112** may be connected to the first pole **104** and the third pole **108** such that a gap **"G"** is retained between edges of the flexible member **112,** and the first pole **104** and the third pole **108.**

In an embodiment, the gap **"G"** or the length of the flexible connecting members **113** between the flexible member **112** and the first pole **104** or the second pole **106,** may be half the distance between the first ends **110** of the first pole **104** and the third pole **108.** The instant gap **"G"** may enable the flexible member 112 to completely converge about the second pole **106** in closed configuration **118,** thereby offering least resistance to wind in the closed configuration **118.**

The flexible member **112** may be have a rectangular (includes square) shape. In an embodiment, the corners of the flexible member **112** may be curved.

The flexible connecting members **113** may be for example a string, rope or a chain. The flexible members **112** may be made for example, using alloy, polymer, fiber, natural material or synthetic material.

The flexible member **112** and the flexible connecting members **113** may be replaceable.

In an embodiment, the second pole **106** may be lengthier than the first pole **104** and the third pole **108.** The lengthier configuration of the second pole **106** may enable the flexible member **112** to assume a closed configuration **118** by converging about the second pole **106,** despite the fact that the flexible member **112** may drop low due to gravity and the flexible connecting members **113.**

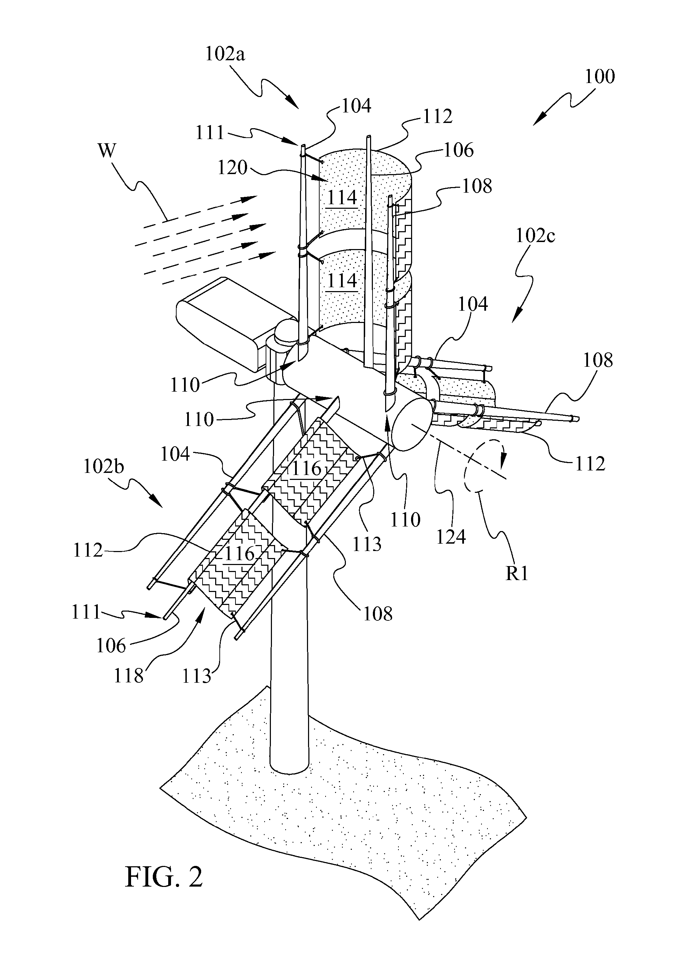

Referring to **FIG. 2****,** in an embodiment, the blade **102** may include a plurality of flexible members **112.** The plurality of flexible members **112** may be disposed along the length of the second pole **106.**

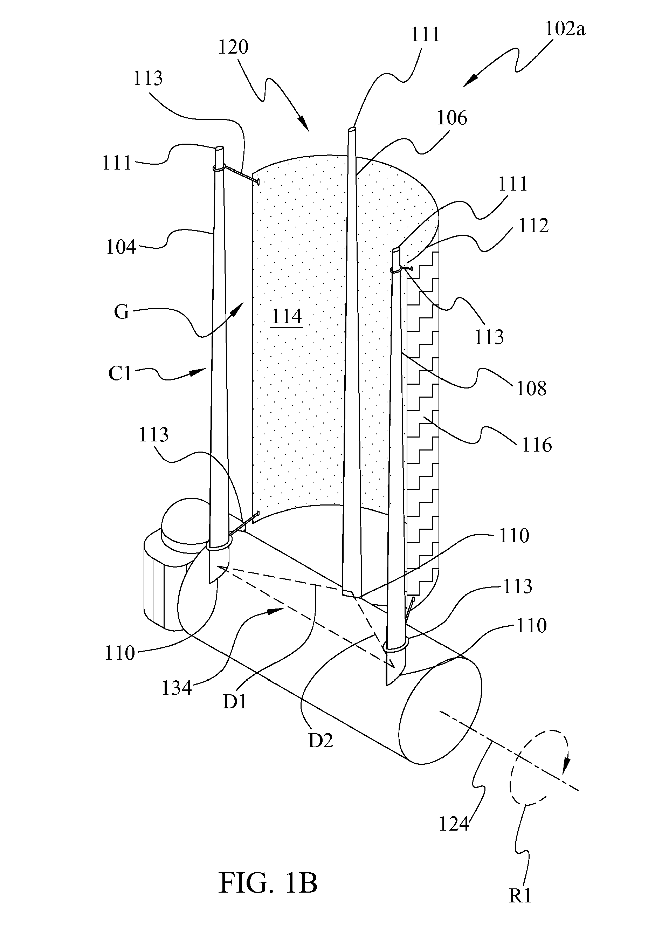

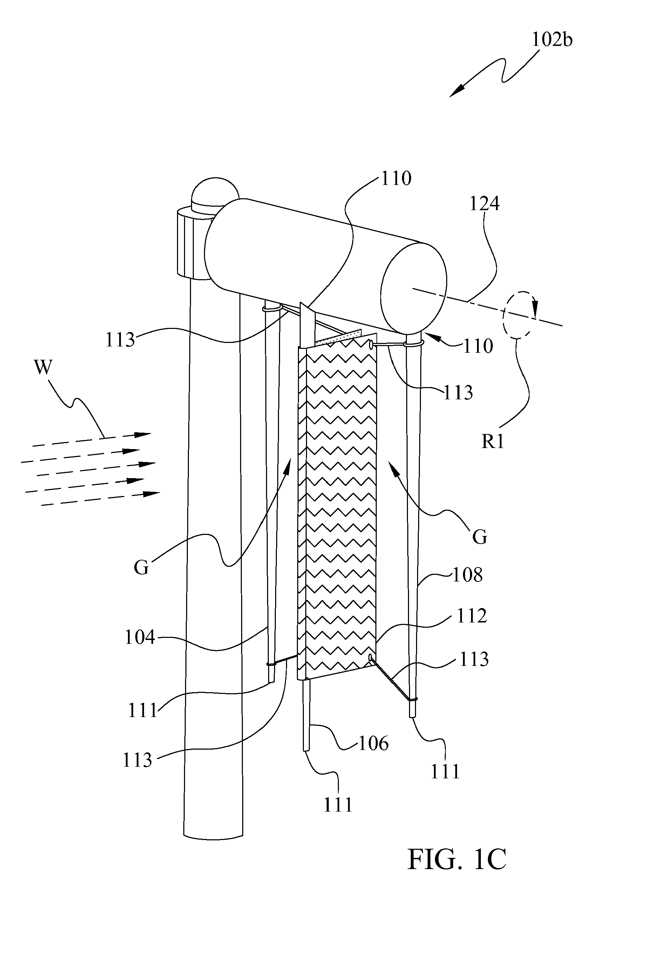

In an embodiment, the flexible member **112** may include a first surface **114** and an opposing second surface **116.** The flexible member **112** may be configured to transform from a closed configuration **118** (refer **FIG. 1C** as well) to an open configuration **120** (refer **FIG. 1B** as well) and vice versa upon the incidence of wind on the flexible member **112.**

The first surface **114** may face substantial volume of wind in the open configuration **120,** whereas the second surface **116** may face substantial volume of wind in the closed configuration **118.** The first surface **114** may define a concave shape **"C1"** with respect to direction **"W"** of the wind when the flexible member **112** is in the open configuration **120.** The flexible member **112** may converges towards the second pole **106** in the closed configuration **118,** and the second pole **106** may prevent the flexible member **112** from assuming a single concave shape in the closed configuration **118.**

The blade **102** offers maximum resistance to wind when the flexible member **112** is in the open configuration **120.** The blade **102** offers minimum resistance to wind when the flexible member **112** is in the closed configuration **118.**

In an embodiment, the flexible member **112** upon incidence of wind on the second surface **116,** the second surface **116** may converge towards the second pole **106** such that it prevents the flexible member **112** from assuming a single concave **shape** in the closed configuration **118.**

The blades **102** rotate about an axis of rotation **124,** wherein the axis of rotation **124** may be parallel to ground.

In an embodiment, the plurality of blades **102** rotating about an axis of rotation **124** may be oriented such that the axis of rotation **124** may be perpendicular to direction **"W"** of wind.

In an embodiment, the plurality of blades **102** may be oriented such that the minor axis **132** of the oblong cross-section defined in each of the poles **104, 106** and **108** is perpendicular to the direction **"W"** of the wind, thereby defining a streamlined structure.

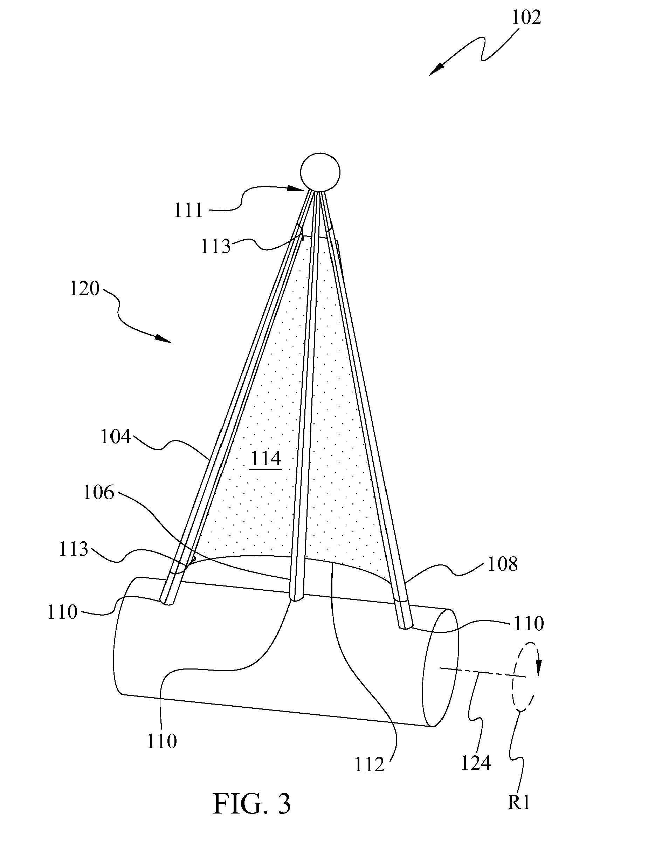

Referring to **FIG. 3****,** in an embodiment, the first end **110** of each of the first pole **104,** the second pole **106** and the third pole **108** may be disposed at corners of a triangle **134.** The poles **104, 106** and **108** may superiorly extend such that they converge towards the end **111** opposite to the first end **110.**

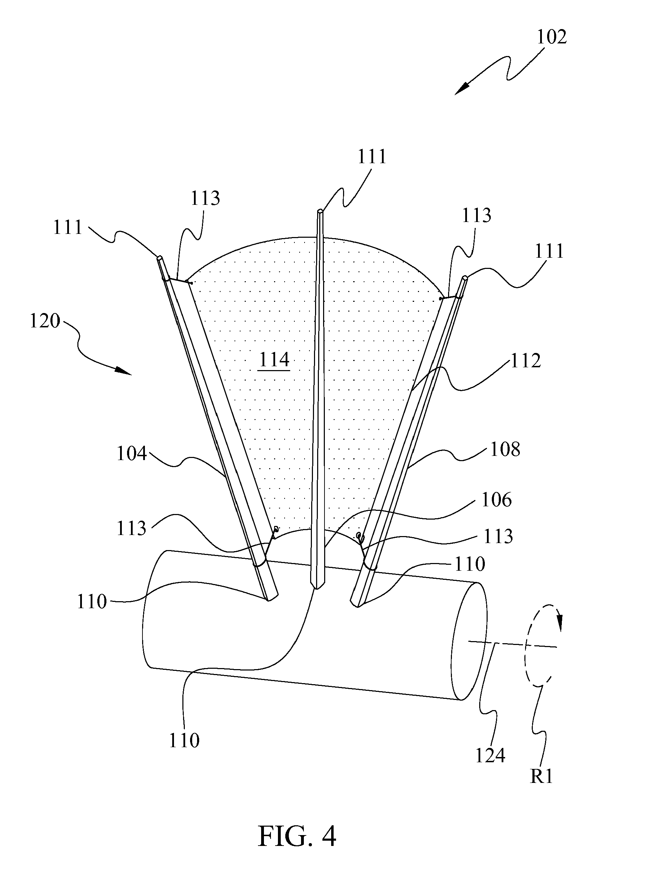

Referring to **FIG. 4****,** in an embodiment, the first end **110** of each of the first pole **104,** the second pole **106** and the third pole **108** may be disposed at corners of a triangle **134.** The poles **104, 106** and **108** may superiorly extend such that they diverge towards the end **111** opposite to the first end **110.**

### III. EXEMPLARY WORKING OF FIRST EXEMPLARY SYSTEM

The system **100** may include system for determining wind direction and/or wind speed and a yaw drive. The information corresponding to wind direction is used to align the nacelle over which the blades **102** may be mounted. The yaw drive may align the nacelle such that the axis of rotation **124** of the plurality of blades **102** is perpendicular to the direction **"W"** of the wind.

The wind force that may be pushing the blade **102a** that may have assumed the open configuration **120** or may be close to assuming the open configuration **120,** to rotate in the direction **"R1",** may overcome the wind force that may be pushing the blade **102c** that may have assumed the closed configuration **118** or may be close to assuming the closed configuration **118,** to rotate the instant blade **102b** in the direction opposite to **"R1",** thereby enabling the blades **102** to rotate in the direction **"R1".** In other words, wind force collectively acting on blades **102** to rotate the blades **102** in the direction **"R1"** exceeds the wind force collectively acting on blades **102** to rotate the blades **102** in the direction opposite to **"R1",** thereby resulting in rotation of the blades **102** in the direction **"R1".** In addition to drag force, the described configurations enable lift force to also contribute to the rotation of the blades **102.**

The concept and technique of this description may be adapted to harvest tidal energy.

Although the concept and technique are illustrated using a horizontal wind turbine, the same can be adapted to a vertical wind turbine. The concept, if adapted in the vertical axis wind turbine, the axis of rotation of the blades will be perpendicular to the ground.

### IV. SECOND EXEMPLARY SYSTEM

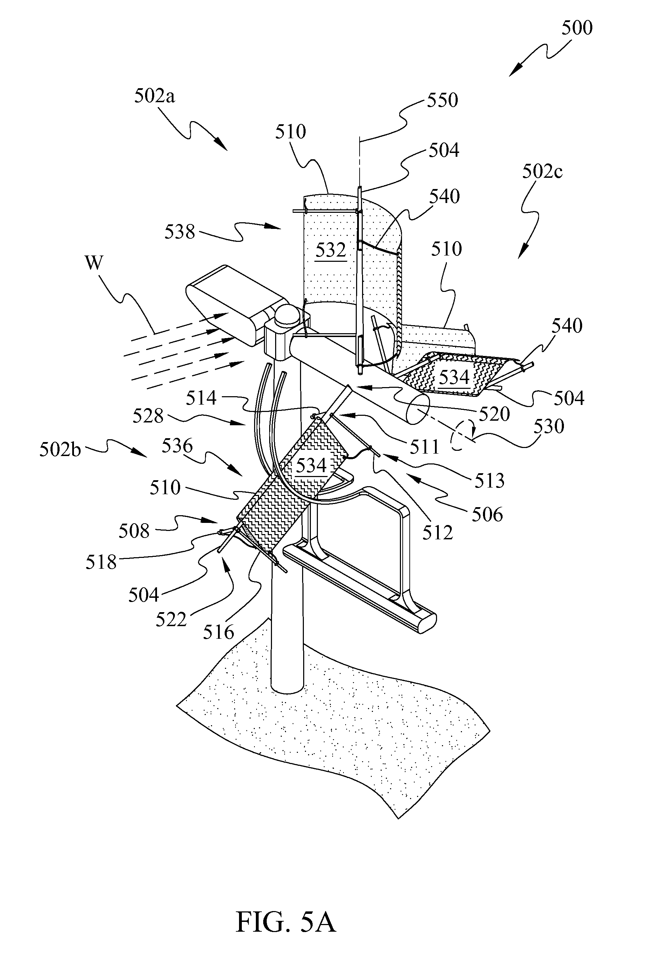

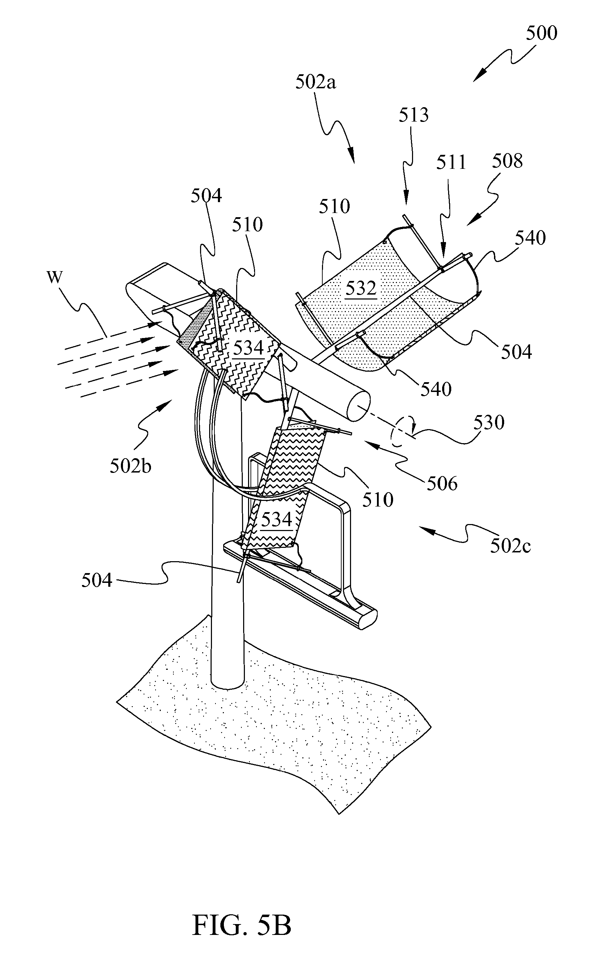

The wind turbine system defined in FIG.**1A**, may include a pair of hoop structures **528** as shown in **FIG.5A-5B****,** so that at least one flexible member will assume open configuration at a time, in order to ensure proper closing/opening of the flexible members. Referring to **FIG. 5A-5B****,** a wind turbine system **500** may include a plurality of blades **502a, 502b, 502c** (the blades **502a, 502b, 502c** may be collectively referred to as blades **502,** or may be individually referred to as blade **502)** and a pair hoop structures **528.** Each of the blades **502** may include a central pole **504,** a first pair of arms **506,** a second pair of arms **508** and a flexible member **510.**

In an embodiment, the central pole **504** may be positioned upright. The first pair of arms **506** may include a first arm **512** and a second arm **514.** The second pair of arms **508** may include a third arm **516** and a fourth arm **518.** Each of the first arm **512,** the second arm **514,** third arm **516** and fourth arm **518** may include a first end **511** and a second end **513.** The second end **513** may be opposite the first end **511**. The first end **511** of the first arm **512** and the second arm **514** may be engaged with the central pole **504** towards the proximal end **520.** The first end **511** of the first arm **512** and the second arm **514** may be engaged with the central pole **504** such that it makes an obtuse angle **"θ1"** with respect to each other. The first end **511** of the third arm **516** and the fourth arm **518** may be engaged with the central pole **504** towards the distal end **522.** The third arm **516** and the fourth arm **518** may be engaged such that it makes an obtuse angle **"θ2"** with respect to each other.

Each of the first arm **512,** the second arm **514,** the third arm **516** and the fourth arm **518** may define edges of a triangular prism, with first arm **512** and the second arm **514** on one side of the prism, and the third arm **516** and the fourth arm **518** on the opposite side of the prism.

The central pole **504** may define an oblong cross-section having a major axis and a minor axis.

In an embodiment, the first arm **512,** the second arm **514,** the third arm **516** and the fourth arm **518** are engaged to the central pole **504** such that the first arm **512** and the third arm **516** lie in a plane and the second arm **514** and the fourth arm **518** lie in the opposing plane. The distance measured between each of the first end **511** of the first arm **512** and the third arm **516** along the longitudinal axis **550** of the central pole **504** may have a length **"L1".** The distance between the second end **513** of the first arm **512** and the third arm **516** may have a length **"L2".** Similarly, the distance between the second end **513** of the second arm **514** and the fourth arm **518** may have length **"L3".**

In an embodiment, the length **"L1"** may greater than the length **"L2".** Similarly, the length **"L1"** may be greater than the length **"L3".**

In an embodiment, the flexible member **510** may include a first surface 532 and an opposing second surface **534.** The flexible member **510** may be connected to or towards the second end **513** of each of the first arm **512,** the second arm **514,** the third arm **516** and fourth arm **518,** such that the first surface **532** of the flexible member **510** faces the central pole **504.**

In an embodiment, the flexible member **510** may be connected to or towards the second end **513** of each of the first arm **512,** the second arm **514,** the third arm **516** and fourth arm **518** using a plurality of connecting members **540.**

The flexible member **510** may be connected to the second end **513** of each of the first arm **512,** the second arm **514,** the third arm **516** and fourth arm **518** such that the flexible member **510** may be disposed along the length of the central pole 504.

The flexible member **510** may be configured to transform from a closed configuration **536** to an open configuration **538** and vice versa. Upon the incidence of wind on the flexible member **510,** the blade **502** may offer maximum resistance to wind in the open configuration **538** and the blades **502** may offer minimum resistance to wind in the closed configuration **536.**

In an embodiment, the wind turbine system **500** may include the pair of hoop structures **528.** The pair of hoop structure **528** may define a curvature. The pair of hoop structure **528** may be parallel to each other.

The hoop structure **528** may be disposed such that the central pole **504** rotating about an axis of rotation **530** passes in between the pair of hoop structure **528.** Further, the first arm **512** and the second arm **514** engaged to the central pole **504** towards the proximal end **520** may reside interior to the hoop structure **530,** when the central pole **504** passes through the hoop structure **528** during rotation. Whereas, the third arm **516** and the fourth arm **518** engaged to the central pole **504** towards the distal end **522** may reside exterior to the hoop structure **528** and the axis of rotation **530.**

Further, the pair of hoop structure **528** may be disposed such that the central pole **504** rotating about the axis of rotation **530** and passing between the pair of hoop structure **528** forces the flexible member **510** to converge towards the central pole **504** to assume the closed configuration **536.** Further, the flexible member **510** may transform from the closed configuration **536** to open configuration **538** only after the central pole **504** is incident at a preconfigured acute angle with the axis of rotation **530** of the central pole **504.**

Each of the hoop structure **528** may define a cross sectional area of oblong cross-section having a major axis and a minor axis.

The first surface **532** of the flexible member **510** may face wind in the open configuration **538.** The second surface **534** of the flexible member **510** may face the wind in the closed configuration **536.**

In an embodiment, upon the incidence of wind on the first surface **532** the flexible member **510** transforms into the open configuration **538** to define a concave shape.

In an embodiment, the central pole **504** passing in between the pair of hoop structure **528** with the flexible member **510** is forced to converge towards the central pole **504,** further the hoop structure **528** may restrict the flexible member **510** from transforming to the open configuration **538** till the central pole **504** is incident at a preconfigured acute angle with the axis of rotation **530,** even when the wind may be possibly interfacing with the first surface **532** of the flexible member **510.** The instant configuration may enable more efficient distribution of wind to the blades **502.**

In an embodiment, the blade 502 may include a plurality of flexible members **510** and a plurality of pair of arms.

The plurality of pair of arms may be engaged to the central pole such that each of the plurality of flexible member may be connected to the second end of the said pair of arms. The plurality of flexible member **510** may be disposed along the length of the central pole **504.** Further, the hoop structure **528** may be positioned such that at least one of the pluralities of flexible members **510** may pass between the pair of hoop structure **528.**

In an embodiment, the hoop structures **528** may be absent.

### V. CONCLUSION

Embodiments provide several advantages, and some of them are mentioned below.

Wind energy is harvested using a configuration wherein the blades are rotated about an axis that is perpendicular to the direction of the wind.

The configuration of the poles and flexible member of each of the blades ensures that the blades rotate in a single direction even though the axis of rotation is perpendicular to the direction of the wind.

It shall be noted that the processes described above is described as sequence of steps, this was done solely for the sake of illustration. Accordingly, it is contemplated that some steps may be added, some steps may be omitted, the order of the steps may be re-arranged, or some steps may be performed simultaneously.

Although embodiments have been described with reference to specific example embodiments, it will be evident that various modifications and changes may be made to these embodiments without departing from the broader spirit and scope of the system and method described herein. Accordingly, the specification and drawings are to be regarded in an illustrative rather than a restrictive sense.

Many alterations and modifications of the present invention will no doubt become apparent to a person of ordinary skill in the art after having read the foregoing description. It is to be understood that the phraseology or terminology employed herein is for the purpose of description and not of limitation. It is to be understood that the description above contains many specifications, these should not be construed as limiting the scope of the invention but as merely providing illustrations of some of the personally preferred embodiments of this invention. Thus the scope of the invention should be determined by the appended claims and their legal equivalents rather than by the examples given.

## Claims

1. A wind turbine system (100) comprising a plurality of blades (102a, 102b, 102c), wherein each of the blades comprises:
a first pole (104), a second pole (106) and a third pole (108), wherein,
each of the first pole, the second pole and the third pole are positioned upright; and
a first end (110) of each of the first pole (104), the second pole (106) and the third pole (108) are disposed at corners of a triangle (134); and
at least one flexible member (112), wherein,
the flexible member is connected to at least the first pole (104) and the third pole (108); and
the second pole (106) is disposed between the first pole (104), the flexible member (112) and the third pole (108).

2. The system according to claim 1, wherein the flexible member (112) is configured to transform from a closed configuration (118) to an open configuration (120) and vice versa, wherein the blade offers maximum resistance to wind when the flexible member is in the open configuration (120), and the blade offers minimum resistance to wind when the flexible member is in the closed configuration (118).

3. The system according to claim 2, wherein the flexible member (112) comprises a first surface (114) and an opposing second surface (116), wherein the first surface (114) faces the wind in the open configuration (120), and the second surface (116) faces the wind in the closed configuration (118).

4. The system according to claim 3, wherein the first surface (114) defines a concave shape with respect to direction of the wind when the flexible member (112) is in the open configuration (120).

5. The system according to claim 4, wherein in the flexible member converges towards the second pole in the closed configuration, and the second pole prevents the flexible member from assuming a single concave shape in the closed configuration.

6. The system according to claim 1, wherein the flexible material is configured to transform from the closed configuration to the open configuration and vice versa by offering resistance to wind, wherein the resistance offered to the wind results in rotation of the blade.

7. The system according to claim 1, wherein the blades rotate about an axis of rotation, wherein the axis of rotation is parallel/perpendicular to ground and perpendicular to direction of wind.

8. The system according to claim 1, wherein the flexible member is connected to the first pole and the third pole using a plurality of flexible connecting members.

9. The system according to claim 8, wherein a gap 'G' is retained between edges of the flexible member, and the first pole and the third pole.

10. The system according to claim 1, further comprising a plurality of flexible members, wherein the flexible members are disposed along the length of the second pole.

11. The system according to claim 1, wherein distance between the first end of the first pole and the second pole is equal to the distance between the first end of the third pole and the second pole.

12. The system according to claim 1, wherein each of the poles defines an oval cross-section having a major axis (130) and a minor axis (132), wherein the minor axis is perpendicular to the direction of wind.

13. The system according to claim 1, further comprising a pair of hoop structures 528, so that at least one flexible member will assume open configuration at a time, in order to ensure proper closing/opening of the flexible members.
